# EUROPÄISCHE PATENTSCHRIFT

(11) **EP 1 479 961 B1**
(45) Veröffentlichungstag und Bekanntmachung des Hinweises auf die Patenterteilung: **31.12.2008**
(21) Anmeldenummer: 04011718.6
(22) Anmeldetag: 18.05.2004
(51) Int. Cl.: F16L 33/207, F16L 13/14

(54) **Pressfitting**
Crimped connection
Raccord à sertir

(30) Priorität: 20.05.2003 DE 10322589
(43) Veröffentlichungstag der Anmeldung: 24.11.2004
(73) Patentinhaber: Uponor Innovation AB, 513 81 Fristad (SE)
(72) Erfinder: Riesselmann, Franz-Josef, 49393 Lohne (DE)
(74) Vertreter: Hilleringmann, Jochen

(56) Entgegenhaltungen:
- WO-A-92/09840
- DE-U- 20 014 786
- GB-A- 363 836

## Beschreibung

Die Erfindung betrifft eine Verbindung aus einem Pressfitting und einem Kunststoffrohr oder einem Kunststoff/Metall-Verbundrohr mit einem aufgeweiteten Anschlussende.

Pressfittings für den Anschluss von Kunststoffrohren oder Kunststoff/Metall-Verbundrohren sind hinlänglich bekannt. Sie umfassen einen Fittingkörper mit einer Stützhülse gegen die mittels einer Presshülse das Anschlussende gepresst wird. Die Stützhülse ist auf ihrer Außenseite im Regelfall profiliert und kann Dichtringe aufweisen. Ein Pressfitting der vorstehend beschriebenen Art ist beispielsweise aus WO 92/09840 und EP-A-0 530 404 bekannt.

Dadurch, dass das Rohr auf die Stützhülse des Fittingkörpers geschoben wird, verringert sich der Durchmesser der Rohrleitung entsprechend der Wanddicke der Stützhülse. Diese Durchmesserreduktion ist teilweise unerwünscht. Daher geht man zum Teil dazu über, das Anschlussende eines Kunststoffrohres oder Kunststoff/Metall-Verbundrohres aufzuweiten, um das aufgeweitete Anschlussende alsdann auf die Stützhülse des Fittingkörpers des Pressfittings aufzuschieben. Der Innendurchmesser der Stützhülse entspricht dabei im wesentlichen dem Innendurchmesser des anzuschließenden Rohres. Ein Pressfitting für den Anschluss eines Rohres mit aufgeweitetem Anschlussende ist z. B. in DE-U-200 16 677 und WO 94/18486 beschrieben. Aus der DE 200 14 786 U ist eine Verbindung eines Pressfittings mit einem Rohr bekannt, die alle Merkmale des Oberbegriffs des Anspruchs 1 beinhaltet.

Durch die Aufweitung des Anschlussendes des Rohres wird dessen Wanddicke im Bereich des Anschlussendes verringert. Erfordert es nun die Einbausituation, dass das Rohr unmittelbar im Anschluss an das aufgeweitete Anschlussende gebogen ist, so kann es zu Beschädigungen im Übergangsbereich des Rohres zwischen dem aufgeweiteten Anschlussende und dem sich daran anschließenden Teil des Rohres kommen.

Es ist daher eine Aufgabe der Erfindung, eine Verbindung aus einem Pressfitting und einem Kunststoffrohr oder Kunststoff/Metall-Verbundrohr mit einem aufgeweiteten Anschlussende zu schaffen, bei der das angeschlossene Rohr gegen mechanische Beschädigungen im Bereich des Anschlussendes geschützt ist.

Zur Lösung dieser Aufgabe wird mit der Erfindung eine Verbindung aus einem Pressfitting und einem Kunststoffrohr bzw. einem Kunststoff/Metall-Verbundrohr mit einem aufgeweiteten Anschlussende vorgeschlagen, die die Merkmale des Anspruchs 1 aufweist.

Die erfindungsgemäße Verbindung verfügt über eine Presshülse, die derart relativ zu Stützhülse angeordnet ist, dass sie in einem ersten Axialabschnitt die Stützhülse umgibt und mit einem zweiten Axialabschnitt über die Stützhülse übersteht. Innerhalb dieses zweiten Axialabschnitts weist die Presshülse einen geringeren Innendurchmesser auf als innerhalb des ersten Axialabschnitts. Der Bereich des kleineren Innendurchmessers ist über einen Übergangsabschnitt mit dem ersten Axialabschnitt verbunden. Somit umgibt die Presshülse sowohl das aufgeweitete Anschlussende des Rohres als auch den sich an dieses Ende anschließenden Bereich des Rohres und schützt diesen gegen mechanische Beschädigungen von außen.

Die zuvor beschriebene Situation gilt zumindest für den verpressten Zustand der Presshülse, also dann, wenn das Rohr mit dem Pressfitting verbunden ist; sie kann aber auch bereits im unverpressten Zustand der Presshülse gegeben sein.

Gemäß einer ersten Alternative der Erfindung ist es möglich, dass die Presshülse im unverpressten Zustand innerhalb ihres zweiten Axialabschnitts bereichsweise einen kleineren Innendurchmesser als der Innendurchmesser des ersten Axialabschnitts aufweist. Innerhalb des ersten Axialabschnitts wird nun eine derartige Presshülse verpresst, während der zweite Axialabschnitt und der Übergangsbereich nicht verpresst werden. Alternativ ist es auch möglich, die Presshülse über ihre gesamte axiale Erstreckung zu verpressen, wobei der Grad der Stauchung bzw. Verpressung im zweiten Axialabschnitt größer sein müsste als im ersten Axialabschnitt, so dass sich schließlich im verpressten Zustand die oben beschriebene Situation ergibt.

Die Presshülse vom zuvor beschriebenen Typ weist zweckmäßigerweise eine über ihre gesamte axiale Erstreckung im wesentlichen konstante Wanddicke auf. Vorteilhaft ist es ferner, wenn der Innendurchmesser im zweiten Axialabschnitt der Presshülse im wesentlichen gleich dem Außendurchmesser des Rohres ist bzw. geringfügig größer als dieser. Auch im Übergangsbereich sollte die Presshülse möglichst gering von der Außenseite des Rohres beabstandet sein.

Eine Presshülse der zuvor beschriebenen Art mit im unverpressten Zustand kleineren Durchmesser innerhalb des zweiten Axialabschnitts kann eine Hülsenform im ersten Abschnitt mit einer sich daran anschließenden Schraubenfeder aufweisen, die den Übergangsabschnitt sowie den zweiten Axialabschnitt bildet. Die Schraubenfeder kann im auf das Rohr aufgeschobenen Ende aufgeweitet sein.

Es ist ferner möglich, dass die Presshülse insbesondere gemäß der ersten Variante der Erfindung zweiteilig aufgebaut sein kann, wobei die beiden Teile untereinander verbunden oder voneinander getrennt auf dem Rohr angeordnet sind. Der den zweiten Axialabschnitt bildende Teil kann als das Rohr umgebende Kunststoffhülle (z. B. aus vernetztem oder unvernetztem PE oder anderem Polyolefin- bzw. Polymermaterial) ausgebildet sein, die z. B. unter Einfluss von Wärme oder auf andere Weise aufschrumpfbar ist.

Eine zweite Alternative zur Erzielung der oben beschriebenen Verbindung ist darin zu sehen, dass die Presshülse in ihrem zweiten Axialabschnitt axiale Schlitze aufweist, die zu dem dem ersten Axialabschnitt abgewandten Ende der Presshülse offen sind. Eine derartige Presshülse, die in ihrem ersten Axialabschnitt eine geschlossene Wandung aufweist, wird nun mittels eines entsprechenden Presswerkzeuges in beiden Axialabschnitten verpresst, und zwar im zweiten Axialabschnitt stärker als im ersten. Die Breite der Schlitze ist derart gewählt, dass sich im zweiten Axialabschnitt, das heißt in dessen im wesentlichen zylindrischen Bereich sowie im Übergangsbereich, geschlossen sind. Damit keinerlei Verwerfungen oder Überlappungen der einander gegenüberliegenden Schlitzenden entstehen, ist es von Vorteil, wenn sich die Schlitze zumindest an ihren dem ersten Axialabschnitt der Presshülse zugewandten Ende konisch verjüngen. Der Grad der Verjüngung und die axiale Erstreckung dieses Verjüngungsabschnitts ist abhängig von dem Unterschied der Innendurchmesser innerhalb der beiden Axialabschnitte sowie der axialen Länge des Übergangsabschnitts. Die Breite der Schlitze, innerhalb desjenigen Bereichs des zweiten Axialabschnitts innerhalb dessen die Presshülse im verpressten Zustand im wesentlichen zylindrisch ist, ist vorteilhafterweise konstant.

Die Erfindung wird nachfolgend unter Bezugnahme auf die Zeichnung näher erläutert. Im einzelnen zeigen:
- Fig. 1: einen Schnitt durch eine Pressfitting-Verbindung nach der Erfindung im verpressten Zustand mit vorgeformter Presshülse und
- Fig. 2: in Seitenansicht eine alternative Presshülse, die eine teilweise geschlitzte Wandung aufweist.

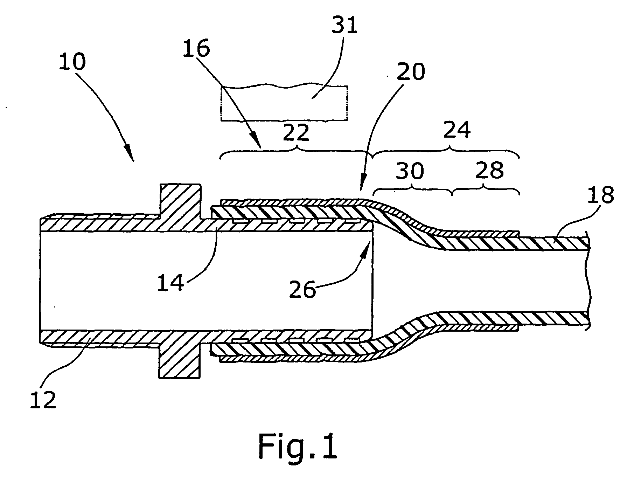

Fig. 1 zeigt ein ersten Ausführungsbeispiel eines Pressfittings 10, der einen Fittingkörper 12 mit einer von diesen abstehenden Stützhülse 14 aufweist. Auf die Stützhülse 14, der eine profilierte Außenfläche mit oder ohne Dichtelemente aufweisen kann, wird das zuvor aufgeweitete Ende 16 eines Rohres 18 aus Kunststoff oder einem Kunststoff/Metall-Verbundwerkstoff geschoben. Um das Anschlussende sowie den sich daran anschließenden Bereich des Rohres 18 herum befindet sich eine Presshülse 20 aus plastisch verformbarem Material (beispielsweise Metall), die in einem ersten Axialabschnitt 22 konzentrisch zur Stützhülse 14 angeordnet ist und innerhalb eines zweiten Axialabschnitts 24 über das freie Ende 26 der Stützhülse 14 übersteht und das Rohr 18 umgibt. Innerhalb des zweiten Axialabschnitts 24 weist die Presshülse einen zylindrischen Bereich 28 auf, innerhalb dessen der Innendurchmesser der Presshülse 20 kleiner ist als der Innendurchmesser des ersten Axialabschnitts 22. Der zylindrische Bereich 28 des zweiten Axialabschnitts 24 ist über einen Übergangsbereich 30 mit dem ersten Axialabschnitt 22 der Presshülse 20 verbunden. Innerhalb dieses Übergangsbereichs 30 verändert sich der Innendurchmesser der Presshülse 20 von dem kleinsten Innendurchmesser im zylindrischen Bereich 28 zum größten Innendurchmesser im ersten Axialabschnitt 22.

Die Presshülse 20 ist vorgeformt und weist im wesentlichen die Form eines Flaschenhalses mit angrenzendem Schulterbereich auf. Lediglich im ersten Axialabschnitt 22 wird die Presshülse 20 mittels eines bei 31 angedeuteten Presswerkzeuges verpresst, um das aufgeweitete Anschlussende 16 des Rohres 18 dicht auf der Stützhülse 14 zu halten.

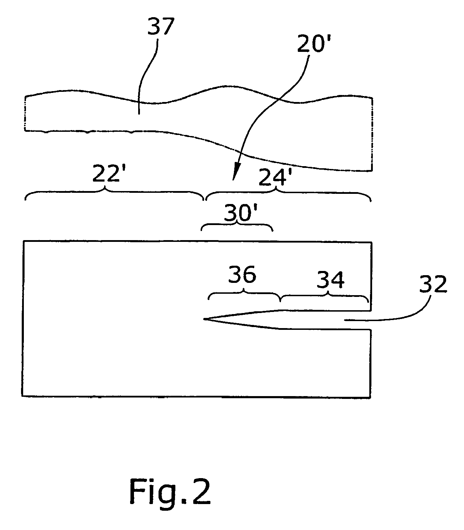

Eine alternativ ausgestaltete Presshülse 20' ist in Fig. 2 dargestellt. Diese Presshülse 20' weist einen ersten Axialabschnitt 22' auf, innerhalb dessen die Wandung der Presshülse 20' geschlossen ist. Innerhalb eines zweiten Axialabschnitts 24' ist die Presshülse 20' mit Schlitzen 32 versehen, die einen Abschnitt 34 konstanter Breite und einen sich konisch verjüngenden zum ersten Axialabschnitt 22' weisenden Bereich 36 umfassen.

Wird nun diese Presshülse 20' für die Rohrverbindung gemäß Fig. 1 verwendet, so wird die Presshülse 20' mittels eines bei 37 angedeuteten Presswerkzeuges verpresst, das aufgrund seiner Ausbildung auch den zweiten Axialabschnitt 24' radial staucht, bis die Schlitze 32 geschlossen sind. Je nach Ausgestaltung können drei oder mehr derartiger Schlitze 32 vorgesehen sein. Durch die Stauchung der Presshülse 20' in ihrem zweiten Axialabschnitt 24' werden die Schlitze 32 geschlossen. Die axiale Erstreckung der sich konisch verjüngenden Bereiche 36 der Schlitze 32 ist dabei gleich dem Übergangsbereich 30 gemäß Fig. 1.

Durch die Umfassung des Rohres 18 innerhalb des sich an das aufgeweitete Ende 16 anschließenden Bereichs wird das Rohr 18 vor mechanischen Beschädigungen geschützt. Denn je nach Aufweitungsgrad des Rohres 18 ist die Wand innerhalb des aufgeweiteten Endes 16 und des sich daran anschließenden Rohrbereichs mehr oder weniger stark verdünnt, wodurch das Rohr anfälliger gegen mechanische Beschädigungen ist. Außerdem wird das Rohr 18 durch die überstehende Presshülse 20 geführt.

## Patentansprüche

1. Verbindung eines Pressfittings mit einem Kunststoffrohr oder einem Kunststoff/Metall-Verbundrohr, das ein aufgeweitetes Anschlussende aufweist, mit
- einem Fittingkörper (12), der eine Stützhülse (14) aufweist, auf die das aufgeweitete Anschlussende (16) eines Rohres (18) aufgeschoben ist, und
- einer Presshülse (20,20') aus einem plastisch verformbaren Material, die das Anschlussende (16) des Rohres (18) gegen die Stützhülse (14) des Fittingkörpers (12) presst,
**dadurch gekennzeichnet, dass** die Presshülse (20,20') einen ersten Axialabschnitt (22,22'), der die Stützhülse (14) des Fittingkörpers (12) sowie das aufgeweitete Anschlussende (16) des Rohres (18) konzentrisch umgibt, und einen zweiten Axialabschnitt (24,24') aufweist, der bei konzentrischer Anordnung des ersten Axialabschnitts zur Stützhülse (14) über diese übersteht und im verpressten Zustand der Presshülse (20,20') einen kleineren Innendurchmesser als der Innendurchmesser des ersten Axialabschnitts aufweist.

2. Verbindung nach Anspruch 1, **dadurch gekennzeichnet, dass** die Presshülse (20) im unverpressten Zustand in ihrem zweiten Axialabschnitt (24) einen kleineren Innendurchmesser als der Innendurchmesser des ersten Axialabschnitts (22) aufweist.

3. Verbindung nach Anspruch 1 oder 2, **dadurch gekennzeichnet, dass** die Presshülse (20,20') über ihre axiale Erstreckung eine im wesentlichen konstante Wanddicke aufweist.

4. Verbindung nach einem der Ansprüche 1 bis 3, **dadurch gekennzeichnet, dass** der Innendurchmesser im zweiten Axialabschnitt (24,24') der Presshülse (20,20') im wesentlichen gleich dem Außendurchmesser des Rohres (18) ist.

5. Verbindung nach Anspruch 1, **dadurch gekennzeichnet, dass** die Presshülse (20') im unverpressten Zustand in ihrem zweiten Axialabschnitt (24') axiale Schlitze (32) aufweist, die zu dem dem ersten Axialabschnitt (22') abgewandten Ende der Presshülse (20') offen sind.

6. Verbindung nach Anspruch 5, **dadurch gekennzeichnet, dass** die Schlitze (32) sich zumindest an ihren dem ersten Axialabschnitt (22') der Presshülse (20') zugewandten Enden konisch verjüngen.

7. Verbindung nach Anspruch 6, **dadurch gekennzeichnet, dass** die Schlitze (32) mit Ausnahme ihrer dem ersten Axialabschnitt (22') der Presshülse (20') zugewandten Ende eine konstante Breite aufweisen.

8. Verbindung nach einem der Ansprüche 1 bis 7, **dadurch gekennzeichnet, dass** die Presshülse zweiteilig ausgebildet ist, wobei der erste Teil den ersten Axialabschnitt (22,22') und der zweite Teil den zweiten Axialabschnitt (24,24') bildet.

9. Verbindung nach Anspruch 8, **dadurch gekennzeichnet, dass** der zweite Teil als Schraubfeder oder als Kunststoffhülse ausgebildet ist.

## Claims

1. Connection of a press fitting with a plastics pipe or a plastics/metal composite pipe with a flared connection end, comprising
- a fitting body (12) with a support sleeve (14) onto which the flared connection end (16) of a pipe (18) is pushed, and
- a compression sleeve (20, 20') of plastically deformable material pressing the connection end (16) of the pipe (18) against the support sleeve (14) of the fitting body (12),
**characterized in that**
the compression sleeve (20, 20') comprises a first axial portion (22, 22') coaxially surrounding the support sleeve (14) of the fitting body (12), as well as the flared connection end (16) of the pipe (18), and a second axial portion (24, 24') which, with the first axial portion being arranged concentrically relative to the support sleeve (14), protrudes beyond the same and, in the pressed state of the compression sleeve (20, 20') has an inner diameter that is smaller than the inner diameter of the first axial portion.

2. The connection of claim 1, **characterized in that**, in the non-pressed state, the compression sleeve (20) has an inner diameter in its second axial portion (24) that is smaller than the inner diameter of the first axial portion (22).

3. The connection of claim 1 or 2, **characterized in that** the compression sleeve (20, 20') has a substantially constant wall thickness over its axial extension.

4. The connection of one of claims 1 to 3, **characterized in that** the inner diameter in the second axial portion (24, 24') of the compression sleeve (20, 20') is substantially equal to the outer diameter of the pipe (18).

5. The connection of claim 1, **characterized in that**, in the non-pressed state, the compression sleeve (20') has axial slots (32) in its second portion (24') open to the end of the compression sleeve (20') averted from the first axial portion (22').

6. The connection of claim 5, **characterized in that** the slots (32) taper conically at least at their ends facing the first axial portion (22') of the compression sleeve (20').

7. The connection of claim 6, **characterized in that** the slits (32) have a constant width with the exception of their ends facing the first axial portion (22') of the compression sleeve (20').

8. The connection of one of claims 1 to 7, **characterized in that** the compression sleeve is bipartite, the first part forming the first axial portion (22, 22') and the second part forming the second axial section (24, 24').

9. The connection of claim 8, **characterized in that** the second part is configured as a helical spring or as a plastics bushing.

## Revendications

1. Connexion d'un raccord à sertir avec un tuyau en matière plastique ou un tuyau composite de matière plastique et métal, comprenant une extrémité de connexion évasée, comprenant
- un corps de raccord (12) avec une douille de support (14) sur laquelle est poussée l'extrémité de connexion évasée (16) d'un tuyau (18), et
- une douille de serrage (20, 20') en un matériau plastiquement déformable, qui presse l'extrémité de connexion (16) dudit tuyau (18) contre la douille de support (14) du corps de raccord (12),
**caractérisée en ce que**
- la douille de serrage (20, 20') comprend une première partie axiale (22, 22'), qui entoure concentriquement non seulement la douille de support (14) du corps de raccord (12), mais encore l'extrémité de connexion évasée (16) du tuyau (18), et une deuxième partie axiale (24, 24'), qui, la première partie axiale positionnée concentriquement par rapport à la douille de support (14), dépasse ladite douille, et dont le diamètre intérieur est moindre que le diamètre intérieur de ladite première partie axiale, quand la douille de serrage (20, 20') est dans l'état non serrée.

2. Connexion selon la revendication 1, **caractérisée en ce que** la deuxième partie axiale (24) de la douille de serrage (20), dans l'état non serré, présente un diamètre intérieur plus petit que le diamètre intérieur de la première partie axiale (22).

3. Connexion selon la revendication 1 ou 2, **caractérisée en ce que** la douille de serrage (20, 20') présente une épaisseur de paroi sensiblement constante suivant la direction axiale.

4. Connexion selon une des revendications 1 à 3, **caractérisée en ce que** le diamètre intérieur dans la deuxième partie axiale (24, 24') est sensiblement égal au diamètre extérieur du tuyau (18).

5. Connexion selon la revendication 1, **caractérisée en ce que** la douille de serrage (20') présente, dans l'état non serré, des fentes axiales (32) dans la deuxième partie axiale (24'), qui sont ouvertes vers l'extrémité de la douille de serrage (20') détournée de la première partie axiale (22').

6. Connexion selon la revendication 5, **caractérisée en ce que** les fentes (32) s'effilent de manière conique au moins à leurs extrémités tournées vers la première partie axiale (22') de la douille de serrage (20').

7. Connexion selon la revendication 6, **caractérisée en ce que** les fentes (32) ont une largeur constant à l'exception de l'extrémité tournée vers la première partie axiale (22') de la douille de serrage (20').

8. Connexion selon une des revendications 1 à 7, **caractérisée en ce que** la douille de serrage est formée de deux pièces, la première pièce formant la première partie axiale (22, 22') et la deuxième pièce formant la deuxième partie axiale (24, 24').

9. Connexion selon la revendication 8, **caractérisée en ce que** la deuxième pièce est en forme d'un ressort cylindrique ou d'une douille en matière plastique.
